# EUROPEAN PATENT SPECIFICATION

(11) **EP 3 925 999 B1**
(45) Date of publication and mention of the grant of the patent: **11.11.2026**
(21) Application number: 19915326.3
(22) Date of filing: 10.12.2019
(51) Int. Cl.: C08G 63/199, C08G 63/66, C08G 63/83, C08L 67/02, C08G 63/183, C08G 63/20, C08G 63/672

(54) **POLYESTER COPOLYMER FOR EXTRUSION**
POLYESTER-COPOLYMER FÜR EXTRUSION
COPOLYMÈRE DE POLYESTER POUR EXTRUSION

(30) Priority: 11.02.2019 KR 20190015698
(43) Date of publication of application: 22.12.2021
(73) Proprietor: SK Chemicals Co., Ltd., Seongnam-si, Gyeonggi-do 13494 (KR)
(72) Inventor: LEE, Jin-Kyung, Seongnam-si, Gyeonggi-do 13494 (KR); KIM, Sung-Gi, Yongin-si, Gyeonggi-do 16823 (KR); KIM, Joo Young, Gunpo-si, Gyeonggi-do 15869 (KR)
(74) Representative: Berggren Oy
(86) International application number: PCT/KR2019/017395
(87) International publication number: WO 2020/166805

(56) References cited:
- EP-A1- 3 845 581
- CN-A- 101 910 242
- KR-A- 20130 136 776
- KR-A- 20140 009 117
- KR-A- 20170 076 558
- KR-B1- 101 361 299
- US-A1- 2013 029 068
- US-A1- 2016 168 321

## Description

### [Technical Field]

The present disclosure relates to polyester copolymer for extrusion and an article comprising the same.

### [Background Art]

Since polyester has excellent mechanical strength, heat resistance, transparency and gas barrier property, it is most suitable as the materials of a beverage bottle, packaging film, audio, video film, and the like, and is being used in large quantities. Further, it is also being widely produced worldwide as industrial materials such as medical fiber or tire cord, and the like. Since a polyester sheet or plate has good transparency and excellent mechanical strength, it is widely used as the materials of a case, a box, a partition, store shelves, a protection panel, blister packaging, building material, interior finishing materials, and the like.

As a method for manufacturing a product using polyester, an IBM (injection blow molding) process is mainly applied, and therethrough, mass-production is enabled. Further, for non-crystalline polyester among polyester, an EBM (extrusion blow molding)/Profile can be applied.

EP3845581A1 discloses a polyester copolymer comprising a residue of a dicarboxylic acid component, a residue of diol components, and a residue of a trifunctional compound. US 2013/0029068 A1 discloses extrusion blow molded articles comprising a polyester having a dicarboxylic acid component and a glycol component. CN101910242A discloses an extrusion-blow molding product that comprises a polyester.

However, decomposition of polyester resin is generated according to exposure to high temperature during a molding process, and as a time of exposure to high temperature is longer, more decomposition is generated, and the viscosity of resin is lowered. As such, if the viscosity of resin is lowered, a molding process may be rendered difficult, and since a high temperature exposure time is long in the EBM/Profile process, such phenomenon tends to get worse. Further, in case a thick container is manufactured with the EBM/Profile process, if viscosity is lowered, thickness may become non-uniform, thus rendering satisfactory processing difficult.

Therefore, there is a demand for development of polyester resin capable of maintaining high viscosity even when exposed to high temperature.

### [Disclosure]

### [Technical Problem]

It is an object of the present disclosure to provide polyester copolymer for extrusion and an article comprising the same.

### [Technical Solution]

In order to achieve the object, there is provided polyester copolymer comprising
1) residues of dicarboxylic acid components comprising terephthalic acid;
2) residues of diol components comprising cyclohexanedimethanol, ethyleneglycol, and isosorbide; and
3) residues of tri-functional compounds, and
   satisfying the following Mathematical Formula 1: [Mathematical Formula 1] $10 % \leq \left({V}_{1}-{V}_{0}\right) {/ V}_{0} \leq 50 %$
   in the Mathematical Formula 1,
   V₀ is complex viscosity of polyester copolymer measured at 210°C and 1 rad/s conditions, and
   V₁ is the 200th measured complex viscosity, when continuously measuring the complex viscosity of polyester copolymer at 210°C and 1 rad/s conditions for 1 hour at an interval of 18 seconds,
   wherein the cyclohexanedimethanol residues are included in the content of 40 to 70 moles, based on 100 moles of the total diol component residues,
   wherein the isosorbide residues are included in the content of 0.1 to 12 moles, based on 100 moles of the total diol component residues,
   wherein the tri-functional compound residues are included in the content of 0.01 to 0.5 parts by weight, based on 100 parts by weight of the polyester copolymer, and
   wherein the tri-functional compound is benzenetricarboxylic acid anhydride.

### Definition of terms

The copolymer according to the present disclosure is polyester copolymer prepared by copolymerization of dicarboxylic acid components and diol components, and in the copolymerization process, a tri-functional compound participates in the reaction.

As used therein, the term 'a residue' means a certain part or unit derived from a specific compound and included in the product of a chemical reaction, when the specific compound participates in the chemical reaction. Specifically, the 'residue' of dicarboxylic acid component or the 'residue' of diol component respectively means a part derived from the dicarboxylic acid component or a part derived from the diol component in the polyester copolymer formed by an esterification reaction or a polycondensation reaction. Further, the 'residue' of a trifunctional compound means a part derived from the trifunctional compound in the ester structure formed by an esterification reaction of the functional group and the diol component.

### Dicarboxylic acid component

The dicarboxylic acid component used in the present disclosure is a main monomer constituting polyester copolymer together with the diol component. Particularly, the dicarboxylic acid comprises terephthalic acid, and thereby, the properties of the polyester copolymer according to the present disclosure, such as heat resistance, chemical resistance, weather resistance, and the like, may be improved.

The dicarboxylic acid component may further comprise an aromatic dicarboxylic acid component, an aliphatic dicarboxylic acid component, or a mixture thereof, besides terephthalic acid. In this case, it is preferable that dicarboxylic acid components other than terephthalic acid may be included in the content of 1 to 30 wt%, based on the total weight of the entire dicarboxylic acid components.

The aromatic dicarboxylic acid component may be C8 to 20, preferably C8 to 14 aromatic dicarboxylic acid or a mixture thereof, and the like. As the examples of the aromatic dicarboxylic acid, isophthalic acid, naphthalenedicarboxylic acid such as 2,6-naphthalenedicarboxylic acid, and the like, diphenyl dicarboxylic acid, 4,4'-stilbenedicarboxylic acid, 2,5-furandicarboxylic acid, 2,5-thiophenedicarboxylic acid, and the like may be mentioned, but specific examples of the aromatic dicarboxylic acid are not limited thereto. The aliphatic dicarboxylic acid component may be C4 to 20, preferably C4 to 12 aliphatic dicarboxylic acid or a mixture thereof, and the like. As the examples of the aliphatic dicarboxylic acid, cyclohexanedicarboxylic acid such as 1,4-cyclohexanedicarboxylic acid, 1,3-cyclohexanedicarboxylic acid, and the like, linear, branched or cyclic aliphatic dicarboxylic acid such as phthalic acid, sebacic acid, succinic acid, isodecylsucinnic acid, maleic acid, fumaric acid, adipic acid, glutaric acid, azelaic acid, and the like, may be mentioned, but specific examples of the aliphatic dicarboxylic acid are not limited thereto.

### Diol component

The diol component used in the present disclosure is a main monomer constituting polyester copolymer together with the above explained dicarboxylic acid component. Particularly, the diol component comprises cyclohexanedimethanol, ethylene glycol, and isosorbide.

The cyclohexanedimethanol (for example, 1,2-cyclohexanedimethanol, 1,3-cyclohexanedimethanol or 1,4-cyclohexanedimethanol) is a component contributing to improvement in the transparency and impact strength of prepared polyester copolymer. The cyclohexanedimethanol residues are included in the content of 40 to 70 moles, based on 100 moles of total diol components.

The ethylene glycol is a component contributing to improvement in the transparency and impact strength of polyester copolymer. Preferably, the ethyleneglycol resides are included in the content of 5 to 25 moles, based on 100 moles of total diol component residues.

The isosorbide is used to improve processability of prepared polyester copolymer. Although the transparency and impact strength of polyester copolymer are improved by the above explained diol components of cyclohexanedimethanol and ethyleneglycol, shear thinning property should be improved and crystallization speed should be delayed for processability, but it is difficult to achieve such effects with cyclohexanedimethanol and ethyleneglycol. Thus, in case isosorbide is included as diol components, shear thinning property may be improved and a crystallization speed may be delayed while maintaining transparency and impact strength, thereby improving the processability of prepared polyester copolymer. The isosorbide residues are included in the content of 0.1 to 12 moles, based on 100 moles of total diol component residues.

### Tri-functional compound

The tri-functional compound used in the present disclosure is a component used for the preparation of polyester copolymer, besides the above explained dicarboxylic acid components and diol components, and is added to further improve processability, particularly shear thinning property.

In an EBM/Profile process, shear thinning property of maintaining low viscosity in the high shear stress section in the screw of a molding machine, and exhibiting high viscosity in the parison forming section with low shear stress, is required. Such a shear thinning property minimizes heat generated by shear stress friction generated in the screw, and lowers the temperature of parison itself, thereby preventing generation of frictional heat at higher temperature than the molding temperature established in the molding machine.

Further, in the case of multi-head EBM to which higher shear stress is applied, multiple parisons are formed in one screw, and for high extrusion amount, RPM of the screw further increases and higher shear stress is applied, thus requiring more excellent shear thinning property.

Although processability of prepared polyester copolymer may be improved by controlling the above explained diol components, in order to improve shear thinning property, it is required to form branch or graft on the main chain of polyester copolymer. In this case, compared to simple linear polyester copolymer, crystallization is rendered difficult, which means improvement in shear thinning property.

In case the tri-functional compound is used as in Examples described below, compared to Comparative Examples that do not use it, viscosity change is controlled, and although not theoretically limited, it results from the preparation as complex chains through the formation of branch or graft on the main chain of polyester copolymer as explained above.

Preferably, the functional group means tricarboxylic acid or an anhydride thereof. More preferably, the tri-functional compound is benzene-1,2,3-tricarboxylic acid, benzene-1,2,3-tricarboxylic acid anhydride, benzene-1,2,4-tricarboxylic acid, or benzene-1,2,4-tricarboxylic acid anhydride.

Preferably, the residues of the tri-functional compound are included in the content of 0.005 to 0.5 parts by weight, based on 100 parts by weight of the polyester copolymer. If the content is greater than 0.5 parts by weight, transparency of prepared polyester copolymer may be deteriorated, and if the content is less than 0.005 parts by weight, processability improvement may be insignificant. The residues of the tri-functional compound are included in the content of 0.01 to 0.5 parts by weight, based on 100 parts by weight of the polyester copolymer.

### Polyester copolymer

The polyester copolymer according to the present disclosure may be prepared by copolymerization of the above explained dicarboxylic acid component, diol component, and tri-function compound. Wherein, the copolymerization may be conducted by sequentially conducting an esterification reaction (step 1) and a polycondensation reaction (step 2).

The esterification reaction is conducted in the presence of an esterification catalyst, and an esterification catalyst comprising a zinc-based compound may be used. As specific examples of such zinc-based catalyst, zinc acetate, zinc acetate dihydrate, zinc chloride, zinc sulfate, zinc sulfide, zinc carbonate, zinc citrate, zinc gluconate, or a mixture thereof may be mentioned.

The esterification reaction may be conducted at a pressure of 0 to 10.0 kg/cm² and a temperature of 150 to 300°C. The esterification reaction conditions may be appropriately controlled according to specific properties of prepared polyester, ratio of each component, or process conditions, and the like. Specifically, as preferable examples of the esterification reaction conditions, a pressure of 0 to 5.0 kg/cm², more preferably 0.1 to 3.0 kg/cm², a temperature of 200 to 270°C, more preferably 240 to 260°C may be mentioned.

Further, the esterification reaction may be conducted batch-wise or continuously, and each raw material may be separately introduced, but it is preferable to introduce in the form of slurry in which dicarboxylic acid components and tri-functional compound are mixed with diol components. Further, a diol component such as isosorbide, which is solid at room temperature, can be made into slurry by dissolving in water or ethyleneglycol, and then, mixing with dicarboxylic acid such as terephthalic acid. Alternatively, slurry can be made by melting isosorbide at 60°C or more, and then, mixing with dicarboxylic acid such as terephthalic acid and other diol components. Further, water may be additionally introduced in the slurry to assist in increasing the flowability of the slurry.

The mole ratio of the dicaboxylic acid component and diol component participating in the esterification reaction may be 1:1.00 to 1:3.00. If the mole ratio of dicaboxylic acid component:diol component is less than 1:1.00, during the polymerization reaction, unreacted dicarboxylic acid component may remain, thus deteriorating transparency of resin, and if the mole ratio is greater than 1:3.00, polymerization speed may decrease or productivity of polyester copolymer may decrease. More preferably, the mole ratio of dicaboxylic acid component and diol component participating in the esterification reaction may be 1:1.05 to 1:1.35.

The polycondensation reaction may be conducted by reacting the esterification reaction product at a temperature of 150 to 300°C and a reduced pressure of 600 to 0.01 mmHg for 1 to 24 hours.

Such a polycondensation reaction may be conducted at a reaction temperature of 150 to 300°C, preferably 200 to 290°C, more preferably 260 to 280°C; and a pressure of 600 to 0.01mmHg, preferably 200 to 0.05 mmHg, more preferably 100 to 0.1 mmHg. By applying the reduced pressure condition, glycol, the by-product of the polycondensation reaction, may be removed outside the system, and thus, if the polycondensation reaction does not meet the reduced pressure condition of 400 to 0.01 mmHg, removal of by-products may be insufficient. Further, if the polycondensation reaction is conducted outside the temperature range of 150 to 300°C, in case the polycondensation reaction is progressed below 150°C, by-product glycol may not be effectively removed outside the system, and thus, the intrinsic viscosity of the final reaction product may be low, and the properties of prepared polyester resin may be deteriorated, and in case the reaction is progressed above 300°C, it may be more likely that the appearance of prepared polyester resin may be yellowed. Further, the polycondensation reaction may be progressed for required time, for example, average residence time of 1 to 24 hours, until the intrinsic viscosity of the final reaction product reaches an appropriate level.

Further, the polycondensation reaction may be conducted using a polycondensation catalyst comprising a titanium-based compound, a germanium-based compound, an antimony-based compound, an aluminum-based compound, a tin-based compounds, or a mixture thereof.

As the examples of the titanium-based compounds, tetraethyl titanate, acetyl tripropyl titanate, tetrapropyl titanate, tetrabutyl titanate, 2-ethylhexyl titanate, octyleneglycol titanate, titanium lactate, triethanolamine titanate, titanium acetylacetonate, titanium ethyl acetoacetate, isostearyl titanate, titanium dioxide, and the like may be mentioned. As the examples of the germanium-based compounds, germanium dioxide, germanium tetrachloride, germanium ethylene glycoxide, germanium acetate, a copolymer using them, or a mixture thereof may be mentioned. Preferably, germanium dioxide may be used, and as such germanium dioxide, both crystalline or non-crystalline germanium dioxide may be used.

Meanwhile, the polyester copolymer according to the present disclosure has intrinsic viscosity of 0.75 to 0.82 dl/g, preferably 0.78 to 0.80 dl/g. **The** measurement method of intrinsic viscosity will be specified in the examples described below.

More preferably, the polyester copolymer according to the present disclosure satisfies the above explained Mathematical Formula 1. The above explained Mathematical Formula 1 evaluates kinematic viscosity change when maintaining the polyester copolymer at 210°C for 1 hour, and particularly, in the present disclosure, such viscosity change is 10% or more and 50% or less. If the viscosity change is less than 10%, decomposition reaction of resin is predominant, and thus, it may be difficult to maintain viscosity suitable for an EBM/Profile process, and if the viscosity change is greater than 50%, due to high viscosity, screw load may increase during an EBM/Profile process, and process temperature should be increased.

According to the present disclosure, there is also provided an article comprising the polyester copolymer.

### [Advantageous Effects]

The above explained polyester copolymer according to the present disclosure can be extrusion-molded, and thus, can be applied for preparation of various containers.

### [Mode for Invention]

Hereinafter, preferable examples will be presented to assist in understanding of the invention. However, these examples are only presented for better understanding of the invention, and the scope of the invention is not limited thereby.

### Example 1

Into a reactor with a capacity of 10 L to which a column, and a condenser that can be cooled by water are connected, TPA(terephthalic acid; 2714.9 g), TMA(trimellitic anhydride; 7.70 g), EG(ethylene glycol; 766.0 g), CHDM(1,4-cyclohexanedimethanol; 1189.3 g), ISB(isosorbide; 4.8 g) were introduced, and GeO₂(2.0 g) was used as a catalyst, phosphoric acid(5.0 g) as a stabilizer, cobalt acetate(0.7 g) as a coloring agent, Polysynthren Blue RLS(Clarient corporation, 0.012 g) as blue toner, and Solvaperm Red BB(Clarient corporation, 0.004 g) as red toner.

Subsequently, nitrogen was introduced into the reactor to pressurize the reactor such that the pressure of the reactor is higher than atmospheric pressure by 1.0 kgf/cm² (absolute pressure: 1495.6 mmHg). Further, the temperature of the reactor was raised to 220°C for 90 minutes, maintained at 220°C for 2 hours, and then, raised to 260°C for 2 hours. And then, the mixture in the reactor was observed with unaided eyes, and until the mixture became transparent, while maintaining the temperature of the reactor at 260°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

Further, the pressure of the reactor was lowered from atmospheric pressure to 667 Pa (pascal) (5 Torr, absolute pressure: 5 mmHg) for 30 minutes, and simultaneously, the temperature of the reactor was raised to 270°C for 1 hour, and while maintaining the pressure of the reactor at 133 Pa (1 Torr, absolute pressure: 1 mmHg) or less, a polycondensation reaction was conducted. At the beginning of the polycondensation reaction, a stirring speed is set rapid, but as the polycondensation reaction progresses, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture(molten material) in the reactor became 0.80 dl/g. If the intrinsic viscosity of the mixture in the reactor reached a desired level, the mixture was discharged outside the reactor to make strand, which was solidified with a coolant, and then, granulated such that the average weight became 12 to 14 mg.

The content of residue of each component included in the polyester copolymer thus prepared was shown in the following Table 1.

### Example 2

Into a reactor with a capacity of 10 L to which a column, and a condenser that can be cooled by water are connected, TPA(2629.2 g), TMA(7.70 g), EG(603.9 g), CHDM(1140.4 g), ISB(427.8 g) were introduced, and GeO₂(2.0 g) was used as a catalyst, phosphoric acid(5.0 g) as a stabilizer, cobalt acetate(0.7 g) as a coloring agent, Polysynthren Blue RLS(Clarient corporation, 0.010 g) as blue toner, and Solvaperm Red BB(Clarient corporation, 0.003 g) as red toner.

Subsequently, nitrogen was introduced into the reactor to pressurize the reactor such that the pressure of the reactor is higher than atmospheric pressure by 1.0 kgf/cm² (absolute pressure: 1495.6 mmHg). Further, the temperature of the reactor was raised to 220°C for 90 minutes, maintained at 220°C for 2 hours, and then, raised to 225°C for 2 hours. And then, the mixture in the reactor was observed with unaided eyes, and until the mixture became transparent, while maintaining the temperature of the reactor at 225°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

Further, the pressure of the reactor was lowered from atmospheric pressure to 667 Pa (5 Torr, absolute pressure: 5 mmHg) for 30 minutes, and simultaneously, the temperature of the reactor was raised to 270°C for 1 hour, and while maintaining the pressure of the reactor at 133 Pa (1 Torr, absolute pressure: 1 mmHg) or less, a polycondensation reaction was conducted. At the beginning of the polycondensation reaction, a stirring speed is set rapid, but as the polycondensation reaction progresses, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture(molten material) in the reactor became 0.80 dl/g. If the intrinsic viscosity of the mixture in the reactor reached a desired level, the mixture was discharged outside the reactor to make strand, which was solidified with a coolant, and then, granulated such that the average weight became 12 to 14 mg.

The content of residues of each component included in the polyester copolymer thus prepared was shown in the following Table 1.

### Example 3

Into a reactor with a capacity of 10 L to which a column, and a condenser that can be cooled by water are connected, TPA(3008.3 g), TMA(2.08 g), EG(966.3 g), CHDM(1043.8 g), ISB(238.1 g) were introduced, and GeO₂(2.0 g) was used as a catalyst, phosphoric acid(5.0 g) as a stabilizer, Polysynthren Blue RLS(Clarient corporation, 0.017 g) as blue toner, and Solvaperm Red BB(Clarient corporation, 0.004 g) as red toner.

Subsequently, nitrogen was introduced into the reactor to pressurize the reactor such that the pressure of the reactor is higher than atmospheric pressure by 0.5 kgf/cm² (absolute pressure: 1127.8 mmHg). Further, the temperature of the reactor was raised to 220°C for 90 minutes, maintained at 220°C for 2 hours, and then, raised to 250°C for 2 hours. And then, the mixture in the reactor was observed with unaided eyes, and until the mixture became transparent, while maintaining the temperature of the reactor at 250°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

Further, the pressure of the reactor was lowered from atmospheric pressure to 667 Pa (5 Torr, absolute pressure: 5 mmHg) for 30 minutes, and simultaneously, the temperature of the reactor was raised to 275°C for 1 hour, and while maintaining the pressure of the reactor at 133 Pa (1 Torr, absolute pressure: 1 mmHg) or less, a polycondensation reaction was conducted. At the beginning of the polycondensation reaction, a stirring speed is set rapid, but as the polycondensation reaction progresses, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture(molten material) in the reactor became 0.78 dl/g. If the intrinsic viscosity of the mixture in the reactor reached a desired level, the mixture was discharged outside the reactor to make strand, which was solidified with a coolant, and then, granulated such that the average weight became 12 to 14 mg.

The content of residues of each component included in the polyester copolymer thus prepared was shown in the following Table 1.

### Example 4

Into a reactor with a capacity of 10 L to which a column, and a condenser that can be cooled by water are connected, TPA(3272.9 g), TMA(2.50 g), EG(537.9 g), CHDM(1987.4 g), ISB(316.6 g) were introduced, and GeO₂(2.0 g) was used as a catalyst, phosphoric acid(5.0 g) as a stabilizer, and cobalt acetate(1.1 g) as a coloring agent.

Subsequently, nitrogen was introduced into the reactor to pressurize the reactor such that the pressure of the reactor is higher than atmospheric pressure by 1.0 kgf/cm² (absolute pressure: 1495.6 mmHg). Further, the temperature of the reactor was raised to 220°C for 90 minutes, maintained at 220°C for 2 hours, and then, raised to 260°C for 2 hours. And then, the mixture in the reactor was observed with unaided eyes, and until the mixture became transparent, while maintaining the temperature of the reactor at 260°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

Further, the pressure of the reactor was lowered from atmospheric pressure to 667 Pa (5 Torr, absolute pressure: 5 mmHg) for 30 minutes, and simultaneously, the temperature of the reactor was raised to 265°C for 1 hour, and while maintaining the pressure of the reactor at 133 Pa (1 Torr, absolute pressure: 1 mmHg) or less, a polycondensation reaction was conducted. At the beginning of the polycondensation reaction, a stirring speed is set rapid, but as the polycondensation reaction progresses, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture(molten material) in the reactor became 0.78 dl/g. If the intrinsic viscosity of the mixture in the reactor reached a desired level, the mixture was discharged outside the reactor to make strand, which was solidified with a coolant, and then, granulated such that the average weight became 12 to 14 mg.

The content of residues of each component included in the polyester copolymer thus prepared was shown in the following Table 1.

### Example 5

Into a reactor with a capacity of 10 L to which a column, and a condenser that can be cooled by water are connected, TPA(2938.9 g), TMA(0.43 g), EG(559.8 g), CHDM(1529.6 g), ISB(103.4 g) were introduced, and GeO₂(2.0 g) was used as a catalyst, phosphoric acid(5.0 g) as a stabilizer, and cobalt acetate(0.9 g) as a coloring agent.

Subsequently, nitrogen was introduced into the reactor to pressurize the reactor such that the pressure of the reactor is higher than atmospheric pressure by 2.0 kgf/cm² (absolute pressure: 2231.1 mmHg). Further, the temperature of the reactor was raised to 220°C for 90 minutes, maintained at 220°C for 2 hours, and then, raised to 265°C for 2 hours. And then, the mixture in the reactor was observed with unaided eyes, and until the mixture became transparent, while maintaining the temperature of the reactor at 265°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

Further, the pressure of the reactor was lowered from atmospheric pressure to 667 Pa (5 Torr, absolute pressure: 5 mmHg) for 30 minutes, and simultaneously, the temperature of the reactor was raised to 285°C for 1 hour, and while maintaining the pressure of the reactor at 133 Pa (1 Torr, absolute pressure: 1 mmHg) or less, a polycondensation reaction was conducted. At the beginning of the polycondensation reaction, a stirring speed is set rapid, but as the polycondensation reaction progresses, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture(molten material) in the reactor became 0.79 dl/g. If the intrinsic viscosity of the mixture in the reactor reached a desired level, the mixture was discharged outside the reactor to make strand, which was solidified with a coolant, and then, granulated such that the average weight became 12 to 14 mg.

The content of residues of each component included in the polyester copolymer thus prepared was shown in the following Table 1.

### Example 6

Into a reactor with a capacity of 10 L to which a column, and a condenser that can be cooled by water are connected, TPA(2597.2 g), TMA(19.00 g), EG(540.3 g), CHDM(1351.8 g), ISB(98.2 g) were introduced, and GeO₂(2.0 g) was used as a catalyst, and phosphoric acid(5.0 g) as a stabilizer.

Subsequently, nitrogen was introduced into the reactor to pressurize the reactor such that the pressure of the reactor is higher than atmospheric pressure by 1.5 kgf/cm² (absolute pressure: 1715.5 mmHg). Further, the temperature of the reactor was raised to 220°C for 90 minutes, maintained at 220°C for 2 hours, and then, raised to 260°C for 2 hours. And then, the mixture in the reactor was observed with unaided eyes, and until the mixture became transparent, while maintaining the temperature of the reactor at 260°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

Further, the pressure of the reactor was lowered from atmospheric pressure to 667 Pa (5 Torr, absolute pressure: 5 mmHg) for 30 minutes, and simultaneously, the temperature of the reactor was raised to 270°C for 1 hour, and while maintaining the pressure of the reactor at 133 Pa (1, absolute pressure: 1 mmHg) or less, a polycondensation reaction was conducted. At the beginning of the polycondensation reaction, a stirring speed is set rapid, but as the polycondensation reaction progresses, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture(molten material) in the reactor became 0.81 dl/g. If the intrinsic viscosity of the mixture in the reactor reached a desired level, the mixture was discharged outside the reactor to make strand, which was solidified with a coolant, and then, granulated such that the average weight became 12 to 14 mg.

The content of residues of each component included in the polyester copolymer thus prepared was shown in the following Table 1.

### Example 7

Into a reactor with a capacity of 10 L to which a column, and a condenser that can be cooled by water are connected, TPA(3034.7 g), TMA(0.42 g), EG(663.1 g), CHDM(1184.6 g), ISB(40.0 g) were introduced, and GeO₂(2.0 g) was used as a catalyst, phosphoric acid(5.0 g) as a stabilizer, Polysynthren Blue RLS(Clarient corporation, 0.013 g) as blue toner, and Solvaperm Red BB(Clarient corporation, 0.004 g) as red toner.

Subsequently, nitrogen was introduced into the reactor to pressurize the reactor such that the pressure of the reactor is higher than atmospheric pressure by 1.0 kgf/cm² (absolute pressure: 1495.6 mmHg). Further, the temperature of the reactor was raised to 220°C for 90 minutes, maintained at 220°C for 2 hours, and then, raised to 265°C for 2 hours. And then, the mixture in the reactor was observed with unaided eyes, and until the mixture became transparent, while maintaining the temperature of the reactor at 265°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

Further, the pressure of the reactor was lowered from atmospheric pressure to 667 Pa (5 Torr, absolute pressure: 5 mmHg) for 30 minutes, and simultaneously, the temperature of the reactor was raised to 275°C for 1 hour, and while maintaining the pressure of the reactor at 133 Pa (1 Torr, absolute pressure: 1 mmHg) or less, a polycondensation reaction was conducted. At the beginning of the polycondensation reaction, a stirring speed is set rapid, but as the polycondensation reaction progresses, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture(molten material) in the reactor became 0.77 dl/g. If the intrinsic viscosity of the mixture in the reactor reached a desired level, the mixture was discharged outside the reactor to make strand, which was solidified with a coolant, and then, granulated such that the average weight became 12 to 14 mg.

The content of residues of each component included in the polyester copolymer thus prepared was shown in the following Table 1.

### Example 8

Into a reactor with a capacity of 10 L to which a column, and a condenser that can be cooled by water are connected, TPA(2854.1 g), TMA(19.75 g), EG(675.8 g), CHDM(1114.1 g), ISB(40.2 g) were introduced, and GeO₂(2.0 g) was used as a catalyst, phosphoric acid(5.0 g) as a stabilizer, Polysynthren Blue RLS(Clarient corporation, 0.020 g) as blue toner, and Solvaperm Red BB(Clarient corporation, 0.008 g) as red toner.

Subsequently, nitrogen was introduced into the reactor to pressurize the reactor such that the pressure of the reactor is higher than atmospheric pressure by 0.5 kgf/cm² (absolute pressure: 1127.8 mmHg). Further, the temperature of the reactor was raised to 220°C for 90 minutes, maintained at 220°C for 2 hours, and then, raised to 268°C for 2 hours. And then, the mixture in the reactor was observed with unaided eyes, and until the mixture became transparent, while maintaining the temperature of the reactor at 268°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

Further, the pressure of the reactor was lowered from atmospheric pressure to 667 Pa (5 Torr, absolute pressure: 5 mmHg) for 30 minutes, and simultaneously, the temperature of the reactor was raised to 275°C for 1 hour, and while maintaining the pressure of the reactor at 133 Pa (1 Torr, absolute pressure: 1 mmHg) or less, a polycondensation reaction was conducted. At the beginning of the polycondensation reaction, a stirring speed is set rapid, but as the polycondensation reaction progresses, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture(molten material) in the reactor became 0.80 dl/g. If the intrinsic viscosity of the mixture in the reactor reached a desired level, the mixture was discharged outside the reactor to make strand, which was solidified with a coolant, and then, granulated such that the average weight became 12 to 14 mg.

The content of residues of each component included in the polyester copolymer thus prepared was shown in the following Table 1.

### Comparative Example 1

Into a reactor with a capacity of 10 L to which a column, and a condenser that can be cooled by water are connected, TPA(2586.6 g), EG(628.0 g), CHDM(1346.3 g), ISB(341.2 g) were introduced, and GeO₂(2.0 g) was used as a catalyst, phosphoric acid(5.0 g) as a stabilizer, Polysynthren Blue RLS(Clarient corporation, 0.017 g) as blue toner, and Solvaperm Red BB(Clarient corporation, 0.006 g) as red toner.

Subsequently, nitrogen was introduced into the reactor to pressurize the reactor such that the pressure of the reactor is higher than atmospheric pressure by 0.5 kgf/cm² (absolute pressure: 1127.8 mmHg). Further, the temperature of the reactor was raised to 220°C for 90 minutes, maintained at 220°C for 2 hours, and then, raised to 260°C for 2 hours. And then, the mixture in the reactor was observed with unaided eyes, and until the mixture became transparent, while maintaining the temperature of the reactor at 260°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

Further, the pressure of the reactor was lowered from atmospheric pressure to 667 Pa (5 Torr, absolute pressure: 5 mmHg) for 30 minutes, and simultaneously, the temperature of the reactor was raised to 275°C for 1 hour, and while maintaining the pressure of the reactor at 133 Pa (1 Torr, absolute pressure: 1 mmHg) or less, a polycondensation reaction was conducted. At the beginning of the polycondensation reaction, a stirring speed is set rapid, but as the polycondensation reaction progresses, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture(molten material) in the reactor became 0.77 dl/g. If the intrinsic viscosity of the mixture in the reactor reached a desired level, the mixture was discharged outside the reactor to make strand, which was solidified with a coolant, and then, granulated such that the average weight became 12 to 14 mg.

The content of residues of each component included in the polyester copolymer thus prepared was shown in the following Table 1.

### Comparative Example 2

Into a reactor with a capacity of 10 L to which a column, and a condenser that can be cooled by water are connected, TPA(2611.4 g), TMA(16.5 g), EG(253.6 g), CHDM(1699.0 g), ISB(436.4 g) were introduced, and GeO₂(2.0 g) was used as a catalyst, phosphoric acid(5.0 g) as a stabilizer, and cobalt acetate (0.7 g) as a coloring agent.

Subsequently, nitrogen was introduced into the reactor to pressurize the reactor such that the pressure of the reactor is higher than atmospheric pressure by 1.0 kgf/cm² (absolute pressure: 1495.6 mmHg). Further, the temperature of the reactor was raised to 220°C for 90 minutes, maintained at 220°C for 2 hours, and then, raised to 260°C for 2 hours. And then, the mixture in the reactor was observed with unaided eyes, and until the mixture became transparent, while maintaining the temperature of the reactor at 260°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

Further, the pressure of the reactor was lowered from atmospheric pressure to 667 Pa (5 Torr, absolute pressure: 5 mmHg) for 30 minutes, and simultaneously, the temperature of the reactor was raised to 280°C for 1 hour, and while maintaining the pressure of the reactor at 133 Pa (1 Torr, absolute pressure: 1 mmHg) or less, a polycondensation reaction was conducted. At the beginning of the polycondensation reaction, a stirring speed is set rapid, but as the polycondensation reaction progresses, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture(molten material) in the reactor became 0.81 dl/g. If the intrinsic viscosity of the mixture in the reactor reached a desired level, the mixture was discharged outside the reactor to make strand, which was solidified with a coolant, and then, granulated such that the average weight became 12 to 14 mg.

The content of residues of each component included in the polyester copolymer thus prepared was shown in the following Table 1.

### Comparative Example 3

Into a reactor with a capacity of 10 L to which a column, and a condenser that can be cooled by water are connected, TPA(2952.4 g), TMA(2.0 g), EG(683.7 g), CHDM(896.4 g), ISB(207.7 g) were introduced, and GeO₂(2.0 g) was used as a catalyst, phosphoric acid(5.0 g) as a stabilizer, Polysynthren Blue RLS(Clarient corporation, 0.012 g) as blue toner, and Solvaperm Red BB(Clarient corporation, 0.004 g) as red toner.

Subsequently, nitrogen was introduced into the reactor to pressurize the reactor such that the pressure of the reactor is higher than atmospheric pressure by 0.5 kgf/cm² (absolute pressure: 1127.8 mmHg). Further, the temperature of the reactor was raised to 220°C for 90 minutes, maintained at 220°C for 2 hours, and then, raised to 265°C for 2 hours. And then, the mixture in the reactor was observed with unaided eyes, and until the mixture became transparent, while maintaining the temperature of the reactor at 265°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

Further, the pressure of the reactor was lowered from atmospheric pressure to 667 Pa (5 Torr, absolute pressure: 5 mmHg) for 30 minutes, and simultaneously, the temperature of the reactor was raised to 280°C for 1 hour, and while maintaining the pressure of the reactor at 133 Pa (1 Torr, absolute pressure: 1 mmHg) or less, a polycondensation reaction was conducted. At the beginning of the polycondensation reaction, a stirring speed is set rapid, but as the polycondensation reaction progresses, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture(molten material) in the reactor became 0.79 dl/g. If the intrinsic viscosity of the mixture in the reactor reached a desired level, the mixture was discharged outside the reactor to make strand, which was solidified with a coolant, and then, granulated such that the average weight became 12 to 14 mg.

The content of residues of each component included in the polyester copolymer thus prepared was shown in the following Table 1.

### Comparative Example 4

Into a reactor with a capacity of 10 L to which a column, and a condenser that can be cooled by water are connected, TPA(2156.1 g), TMA(6.4 g), EG(539.5 g), CHDM(935.2 g), ISB(436.2 g) were introduced, and GeO₂(2.0 g) was used as a catalyst, phosphoric acid(5.0 g) as a stabilizer, Polysynthren Blue RLS(Clarient corporation, 0.010 g) as blue toner, and Solvaperm Red BB(Clarient corporation, 0.003 g) as red toner.

Subsequently, nitrogen was introduced into the reactor to pressurize the reactor such that the pressure of the reactor is higher than atmospheric pressure by 1.5 kgf/cm² (absolute pressure: 1715.5 mmHg). Further, the temperature of the reactor was raised to 220°C for 90 minutes, maintained at 220°C for 2 hours, and then, raised to 260°C for 2 hours. And then, the mixture in the reactor was observed with unaided eyes, and until the mixture became transparent, while maintaining the temperature of the reactor at 260°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

Further, the pressure of the reactor was lowered from atmospheric pressure to 667 Pa (5 Torr, absolute pressure: 5 mmHg) for 30 minutes, and simultaneously, the temperature of the reactor was raised to 270°C for 1 hour, and while maintaining the pressure of the reactor at 133 Pa (1 Torr, absolute pressure: 1 mmHg) or less, a polycondensation reaction was conducted. At the beginning of the polycondensation reaction, a stirring speed is set rapid, but as the polycondensation reaction progresses, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture(molten material) in the reactor became 0.80 dl/g. If the intrinsic viscosity of the mixture in the reactor reached a desired level, the mixture was discharged outside the reactor to make strand, which was solidified with a coolant, and then, granulated such that the average weight became 12 to 14 mg.

The content of residues of each component included in the polyester copolymer thus prepared was shown in the following Table 1.

### Comparative Example 5

Into a reactor with a capacity of 10 L to which a column, and a condenser that can be cooled by water are connected, TPA(2870.6 g), TMA(25.2 g), EG(707.6 g), CHDM(1494.1 g), ISB(101.0 g) were introduced, and GeO₂(2.0 g) was used as a catalyst, phosphoric acid(5.0 g) as a stabilizer, and cobalt acetate (0.7 g) as a coloring agent.

Subsequently, nitrogen was introduced into the reactor to pressurize the reactor such that the pressure of the reactor is higher than atmospheric pressure by 2.0 kgf/cm² (absolute pressure: 2231.1 mmHg). Further, the temperature of the reactor was raised to 220°C for 90 minutes, maintained at 220°C for 2 hours, and then, raised to 265°C for 2 hours. And then, the mixture in the reactor was observed with unaided eyes, and until the mixture became transparent, while maintaining the temperature of the reactor at 265°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

Further, the pressure of the reactor was lowered from atmospheric pressure to 667 Pa (5 Torr, absolute pressure: 5 mmHg) for 30 minutes, and simultaneously, the temperature of the reactor was raised to 270°C for 1 hour, and while maintaining the pressure of the reactor at 133 Pa (1 Torr, absolute pressure: 1 mmHg) or less, a polycondensation reaction was conducted. At the beginning of the polycondensation reaction, a stirring speed is set rapid, but as the polycondensation reaction progresses, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture(molten material) in the reactor became 0.81 dl/g. If the intrinsic viscosity of the mixture in the reactor reached a desired level, the mixture was discharged outside the reactor to make strand, which was solidified with a coolant, and then, granulated such that the average weight became 12 to 14 mg.

The content of residues of each component included in the polyester copolymer thus prepared was shown in the following Table 1.

### Comparative Example 6

Into a reactor with a capacity of 10 L to which a column, and a condenser that can be cooled by water are connected, TPA(2595.8 g), TMA(19.5 g), EG(533.2 g), CHDM(1576.3 g) were introduced, and GeO₂(2.0 g) was used as a catalyst, phosphoric acid(5.0 g) as a stabilizer, and cobalt acetate (0.8 g) as a coloring agent.

Subsequently, nitrogen was introduced into the reactor to pressurize the reactor such that the pressure of the reactor is higher than atmospheric pressure by 1.5 kgf/cm² (absolute pressure: 1715.5 mmHg). Further, the temperature of the reactor was raised to 220°C for 90 minutes, maintained at 220°C for 2 hours, and then, raised to 260°C for 2 hours. And then, the mixture in the reactor was observed with unaided eyes, and until the mixture became transparent, while maintaining the temperature of the reactor at 260°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

Further, the pressure of the reactor was lowered from atmospheric pressure to 667 Pa (5 Torr, absolute pressure: 5 mmHg) for 30 minutes, and simultaneously, the temperature of the reactor was raised to 275°C for 1 hour, and while maintaining the pressure of the reactor at 133 Pa (1 Torr, absolute pressure: 1 mmHg) or less, a polycondensation reaction was conducted. At the beginning of the polycondensation reaction, a stirring speed is set rapid, but as the polycondensation reaction progresses, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture(molten material) in the reactor became 0.80 dl/g. If the intrinsic viscosity of the mixture in the reactor reached a desired level, the mixture was discharged outside the reactor to make strand, which was solidified with a coolant, and then, granulated such that the average weight became 12 to 14 mg.

The content of residues of each component included in the polyester copolymer thus prepared was shown in the following Table 1.

### Experimental Example

For the copolymers prepared in the Examples and Comparative Examples, properties were evaluated as follows.

### 1) Intrinsic viscosity

The polyester copolymer was dissolved in 150°C orthochlorophenol(OCP) at the concentration of 0.12%, and then, the intrinsic viscosity was measured using Ubbelohde viscometer in a constant-temperature bath of 35°C.

### 2) Composition of residues

The compositions(mol%) of residues derived from acid and diol in polyester resin were confirmed through 1H-NMR spectrum obtained using nuclear magnetic resonance device (JEOL, 600MHz FT-NMR) at 25°C, after dissolving a sample in a CDCl₃ solvent at the concentration of 3 mg/mL. Further, TMA residues were confirmed by quantitatively analyzing the content of benzene-1,2,4-triethylcarboxylate produced by the reaction of ethanol with TMA through ethanolysis, through the spectrum measured using gas chromatography(Agilent Technologies, 7890B) at 250°C, and contents(wt%) based on the total weight of polyester resin were confirmed.

### 3) Viscosity change

Using Physica MCR 301 equipment of Anton Paar, for the polyester copolymers prepared in Examples and Comparative Examples, complex viscosity at 210°C and a shear rate of 1.0 rad/s under nitrogen was measured (V₀, Pa·s). When measuring, parallel plates with a diameter of 25 mm were positioned parallel at an interval of 1 mm to 2 mm. And then, while rotating at 1 rad/s, complex viscosity was continuously measured every 18 seconds for 1 hour, and the two hundredth measurement value was confirmed as the final complex viscosity (V₁, Pa·s). The measured V₀ and V₁ were substituted in the following Mathematical Formula to calculate viscosity change.$Viscosity change = \left({V}_{1}-{V}_{0}\right) {/ V}_{0}$

The above results were shown in the following Table 1.

**[Table 1]**

| | TPA | EG | CHDM | ISB | TMA | Intrinsic viscosity | Viscosity change |
|---|---|---|---|---|---|---|---|
| Unit | mol% | mol% | mol% | mol% | wt% | dl/g | % |
| Example 1 | 100 | 49.9 | 50 | 0.1 | 0.2 | 0.80 | 35 |
| Example 2 | 100 | 38 | 50 | 12 | 0.2 | 0.80 | 30 |
| Example 3 | 100 | 55 | 40 | 5 | 0.05 | 0.78 | 15 |
| Example 4 | 100 | 25 | 70 | 5 | 0.05 | 0.78 | 20 |
| Example 5 | 100 | 38 | 60 | 2 | 0.01 | 0.79 | 10 |
| Example 6 | 100 | 38 | 60 | 2 | 0.5 | 0.81 | 45 |
| Example 7 | 100 | 54 | 45 | 1 | 0.01 | 0.77 | 13 |
| Example 8 | 100 | 54 | 45 | 1 | 0.5 | 0.80 | 47 |
| Comparative Example 1 | 100 | 33 | 60 | 7 | 0 | 0.77 | 0 |
| Comparative Example 2 | 100 | 15 | 75 | 10 | 0.4 | 0.81 | 55 |
| Comparative Example 3 | 100 | 65 | 35 | 5 | 0.05 | 0.79 | 5 |
| Comparative Example 4 | 100 | 35 | 50 | 15 | 0.2 | 0.80 | 8 |
| Comparative Example 5 | 100 | 38 | 60 | 2 | 0.6 | 0.81 | 65 |
| Comparative Example 6 | 100 | 30 | 70 | 0 | 0.5 | 0.80 | 60 |

## Claims

1. Polyester copolymer comprising
1) residues of dicarboxylic acid components comprising terephthalic acid;
2) residues of diol components comprising cyclohexanedimethanol, ethyleneglycol, and isosorbide; and
3) residues of tri-functional compounds, and
satisfying the following Mathematical Formula 1: [Mathematical Formula 1] $10 % \leq \left({V}_{1}-{V}_{0}\right) {/ V}_{0} \leq 50 %$
in the Mathematical Formula 1,
V₀ is complex viscosity of polyester copolymer measured at 210°C and 1 rad/s conditions according to the description, and
V₁ is the 200th measured complex viscosity, when continuously measuring the complex viscosity of polyester copolymer at 210°C and 1 rad/s conditions for 1 hour at an interval of 18 seconds according to the description,
wherein the cyclohexanedimethanol residues are included in the content of 40 to 70 moles, based on 100 moles of the total diol component residues,
wherein the isosorbide residues are included in the content of 0.1 to 12 moles, based on 100 moles of the total diol component residues,
wherein the tri-functional compound residues are included in the content of 0.01 to 0.5 parts by weight, based on 100 parts by weight of the polyester copolymer, and
wherein the tri-functional compound is benzenetricarboxylic acid anhydride.

2. The polyester copolymer according to claim 1,
wherein the ethyleneglycol residues are included in the content of 5 to 25 moles, based on 100 moles of the total diol component residues.

3. The polyester copolymer according to claim 1,
wherein the tri-functional compound is benzene-1,2,3-tricarboxylic acid anhydride, or benzene-1,2,4-tricarboxylic acid anhydride.

4. A method for preparing the polyester copolymer according to any one of claims 1 to 3, comprising steps of:
subjecting dicarboxylic acid components, diol components, and tri-functional compounds to an esterification reaction (step 1); and
subjecting the product of the step 1 to a polycondensation reaction (step 2).

5. The method according to claim 4,
wherein the esterification reaction is conducted in the presence of an esterification catalyst comprising zinc acetate, zinc acetate dihydrate, zinc chloride, zinc sulfate, zinc sulfide, zinc carbonate, zinc citrate, zinc gluconate, or a mixture thereof.

6. The method according to claim 4,
wherein the polycondensation reaction is conducted in the presence of a polycondensation catalyst comprising a titanium-based compound, a germanium-based compound, an antimony-based compound, an aluminum-based compound, a tin-based compound, or a mixture thereof.

7. An article comprising the polyester copolymer according to any one of claims 1 to 3.

## Patentansprüche

1. Polyestercopolymer, umfassend
1) Reste von Dicarbonsäurekomponenten, die Terephthalsäure umfassen;
2) Reste von Diolkomponenten, die Cyclohexandimethanol, Ethylenglykol und Isosorbid umfassen; und
3) Reste von trifunktionellen Verbindungen,
wobei das Polyestercopolymer die folgende mathematische Formel 1 erfüllt: [Mathematische Formel 1] $10 % \leq \left({V}_{1}-{V}_{0}\right) {/ V}_{0} \leq 50 % ,$
wobei in der mathematischen Formel 1
V₀ die gemäß der Beschreibung unter Bedingungen von 210°C und 1 rad/s gemessene komplexe Viskosität des Polyestercopolymers ist und
V₁ die 200. gemessene komplexe Viskosität ist, wenn die komplexe Viskosität des Polyestercopolymers gemäß der Beschreibung unter Bedingungen von 210°C und 1 rad/s über 1 Stunde in einem Intervall von 18 Sekunden kontinuierlich gemessen wird,
wobei die Cyclohexandimethanolreste in einem Gehalt von 40 bis 70 Mol, bezogen auf 100 Mol der gesamten Diolkomponentenreste, enthalten sind,
wobei die Isosorbidreste in einem Gehalt von 0,1 bis 12 Mol, bezogen auf 100 Mol der gesamten Diolkomponentenreste, enthalten sind,
wobei die Reste der trifunktionellen Verbindung in einem Gehalt von 0,01 bis 0,5 Gewichtsteilen, bezogen auf 100 Gewichtsteile des Polyestercopolymers, enthalten sind und
wobei die trifunktionelle Verbindung Benzoltricarbonsäureanhydrid ist.

2. Polyestercopolymer nach Anspruch 1,
wobei die Ethylenglykolreste in einem Gehalt von 5 bis 25 Mol, bezogen auf 100 Mol der gesamten Diolkomponentenreste, enthalten sind.

3. Polyestercopolymer nach Anspruch 1,
wobei die trifunktionelle Verbindung Benzol-1,2,3-tricarbonsäureanhydrid oder Benzol-1,2,4-tricarbonsäureanhydrid ist.

4. Verfahren zur Herstellung des Polyestercopolymers nach einem der Ansprüche 1 bis 3, umfassend die Schritte:
Dicarbonsäurekomponenten, Diolkomponenten und trifunktionelle Verbindungen einer Veresterungsreaktion unterziehen (Schritt 1); und das Produkt aus Schritt 1 einer Polykondensationsreaktion unterziehen (Schritt 2).

5. Verfahren nach Anspruch 4,
wobei die Veresterungsreaktion in Gegenwart eines Veresterungskatalysators durchgeführt wird, der Zinkacetat, Zinkacetat-Dihydrat, Zinkchlorid, Zinksulfat, Zinksulfid, Zinkcarbonat, Zinkcitrat, Zinkgluconat oder ein Gemisch davon umfasst.

6. Verfahren nach Anspruch 4,
wobei die Polykondensationsreaktion in Gegenwart eines Polykondensationskatalysators durchgeführt wird, der eine Verbindung auf Titanbasis, eine Verbindung auf Germaniumbasis, eine Verbindung auf Antimonbasis, eine Verbindung auf Aluminiumbasis, eine Verbindung auf Zinnbasis oder ein Gemisch davon umfasst.

7. Gegenstand, umfassend das Polyestercopolymer nach einem der Ansprüche 1 bis 3.

## Revendications

1. Copolymère de polyester comprenant
1) des résidus de composants acides dicarboxyliques comprenant de l'acide téréphtalique ;
2) des résidus de composants diols comprenant du cyclohexanediméthanol, de l'éthylène glycol et de l'isosorbide ; et
3) des résidus de composés trifonctionnels, et satisfaisant à la formule mathématique 1 suivante : [Formule mathématique 1] $10 % \leq \left({V}_{1}-{V}_{0}\right) {/ V}_{0} \leq 50 %$
dans la formule mathématique 1,
V₀ est la viscosité complexe du copolymère de polyester mesurée dans des conditions de 210°C et de 1 rad/s conformément à la description, et V₁ est la 200e viscosité complexe mesurée lorsque la viscosité complexe du copolymère de polyester est mesurée en continu dans des conditions de 210°C et de 1 rad/s pendant 1 heure, à des intervalles de 18 secondes, conformément à la description,
dans lequel les résidus de cyclohexanediméthanol sont inclus en une teneur de 40 à 70 moles, sur la base de 100 moles de la totalité des résidus de composants diols,
dans lequel les résidus d'isosorbide sont inclus en une teneur de 0,1 à 12 moles, sur la base de 100 moles de la totalité des résidus de composants diols,
dans lequel les résidus de composés trifonctionnels sont inclus en une teneur de 0,01 à 0,5 partie en poids, sur la base de 100 parties en poids du copolymère de polyester, et
dans lequel le composé trifonctionnel est un anhydride d'acide benzènetricarboxylique.

2. Copolymère de polyester selon la revendication 1,
dans lequel les résidus d'éthylène glycol sont inclus en une teneur de 5 à 25 moles, sur la base de 100 moles de la totalité des résidus de composants diols.

3. Copolymère de polyester selon la revendication 1,
dans lequel le composé trifonctionnel est l'anhydride d'acide benzène-1,2,3-tricarboxylique ou l'anhydride d'acide benzène-1,2,4-tricarboxylique.

4. Procédé de préparation du copolymère de polyester selon l'une quelconque des revendications 1 à 3, comprenant les étapes consistant à :
soumettre des composants acides dicarboxyliques, des composants diols et des composés trifonctionnels à une réaction d'estérification (étape 1) ; et
soumettre le produit de l'étape 1 à une réaction de polycondensation (étape 2).

5. Procédé selon la revendication 4,
dans lequel la réaction d'estérification est conduite en présence d'un catalyseur d'estérification comprenant de l'acétate de zinc, de l'acétate de zinc dihydraté, du chlorure de zinc, du sulfate de zinc, du sulfure de zinc, du carbonate de zinc, du citrate de zinc, du gluconate de zinc ou un mélange de ceux-ci.

6. Procédé selon la revendication 4,
dans lequel la réaction de polycondensation est conduite en présence d'un catalyseur de polycondensation comprenant un composé à base de titane, un composé à base de germanium, un composé à base d'antimoine, un composé à base d'aluminium, un composé à base d'étain ou un mélange de ceux-ci.

7. Article comprenant le copolymère de polyester selon l'une quelconque des revendications 1 à 3.
